# EUROPEAN PATENT SPECIFICATION

(11) **EP 0 780 248 B1**
(45) Date of publication and mention of the grant of the patent: **05.04.2000**
(21) Application number: 96120267.8
(22) Date of filing: 17.12.1996
(51) Int. Cl.: B60C 15/06

(54) **Vehicle radial tire**
Radialer Luftreifen
Pneumatique radial

(30) Priority: 19.12.1995 IT TO951027
(43) Date of publication of application: 25.06.1997
(73) Proprietor: Bridgestone Corporation, Tokyo 104-8340 (JP)
(72) Inventor: Lesti, Franco, 00153 Roma (IT); Funaro, Italo, 00036 Valvarino-Palestrina (IT)
(74) Representative: Jorio, Paolo

(56) References cited:
- EP-A- 0 465 188
- FR-A- 2 013 540
- FR-A- 2 286 014
- US-A- 3 406 733
- US-A- 5 117 888

## Description

The present invention relates to a vehicle radial tire.

Vehicle radial tires normally present, along the inner periphery, two metal beads, each of which is fitted along its outer periphery with a filler of elastomeric material, normally in the form of a substantially triangular-section wing. Each bead and respective filler are covered with a respective upturned U-shaped lateral portion of a body ply, the upturned end portion of which joins the outer surface of the central portion of the body ply over the outer end of the filler. The surface, facing inwards of the tire, of the assembly so formed is normally covered with an innerliner; the surface of the assembly facing outwards of the tire is normally covered with an abrasion strip; and the innerliner and abrasion strip are integral with each other and folded about the respective said lateral portion of the body ply.

As is known, the main function of the fillers, which are normally made of elastomeric material with a high modulus of elasticity and a Shore hardness of 85-95°, is to ensure the lateral stability of the tire by defining, inside the tire, a leaf spring element for smoothing the passage, elastically speaking, between the relatively rigid beads and the relatively flexible lateral walls. In other words, the main function of the fillers is to achieve a high "steering capability" of the tire, i.e. ensure that, in use, the tire responds to external stress with no unexpected deformation.

The steering capability of known tires is normally enhanced by increasing the rigidity of the filler material and/or by using fillers as high as possible to increase their mass.

Both solutions present drawbacks. On the one hand, excessively rigid fillers reduce the fatigue resistance of the tires, while, on the other, increasing the height and mass of the fillers makes them difficult to handle, impairs the shape stability of the fillers, and results in an undesired increase in the weight of the tires.

It is an object of the present invention to provide a radial tire of such a structure as to enable straightforward manufacture, while at the same time enhancing the steering capability and reducing the weight of the tire as compared with known tires of the same type.

A tire according to the preamble of claim 1 is known from e.g. US-A-5 117 888.

According to the present invention, there is provided a vehicle radial tire comprising the features of claim 1.

A non-limiting embodiment of the present invention will be described by way of example with reference to the accompanying drawings, in which:
Figure 1 shows a schematic, partially exploded cross section of a preferred embodiment of the tire according to the present invention;
Figure 2 shows a schematic spreadout view of a portion of the Figure 1 tire at one stage of construction.

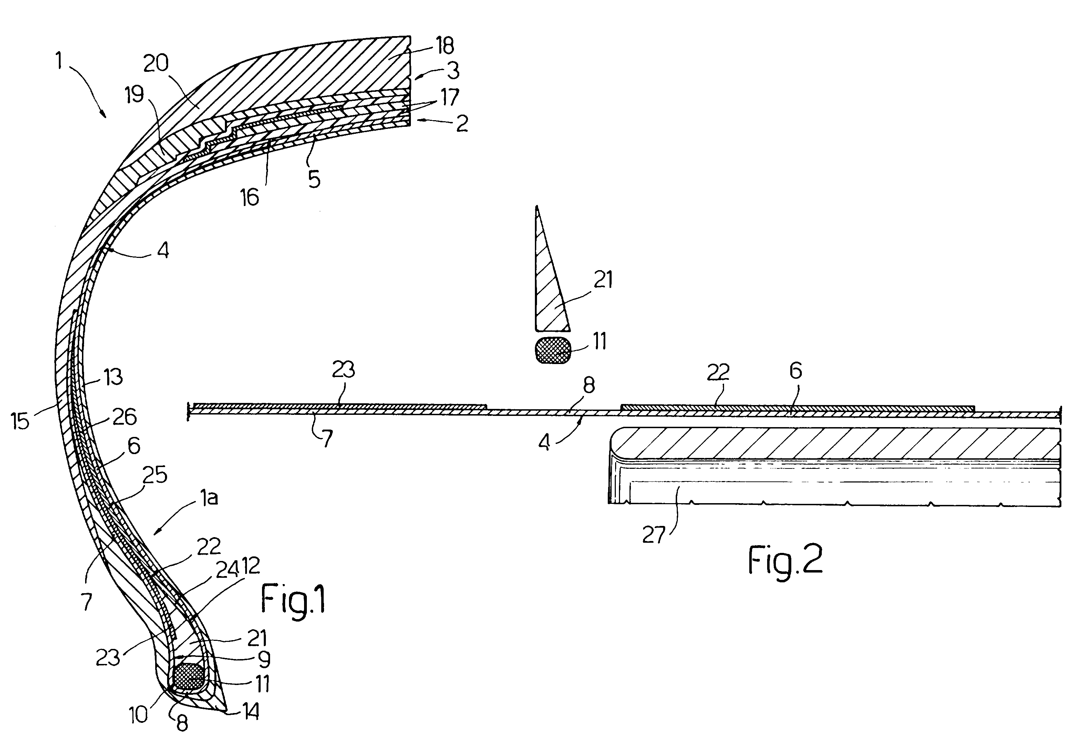

Number 1 in Figure 1 indicates a vehicle tire comprising an inner toroidal carcass 2 and an outer annular assembly indicated as a whole by 3.

Carcass 2 comprises a substantially toroidal reinforced body ply 4, in turn comprising a substantially cylindrical inner central portion 5 located inside annular assembly 3, two annular inner intermediate portions 6 (only one shown) located on either side of and integral with central portion 5, and two annular outer upturned portions 7 (only one shown), each of which is made integral with respective intermediate portion 6 by means of a curved portion 8.

A free edge of each upturned portion 7 is placed directly contacting a portion of respective intermediate portion 6, so as to define, with intermediate portion 6 and respective curved portion 8, a substantially closed annular chamber 9 housing an assembly 10 defined by a metal bead 11 and by a bead filler 12 extending radially outwards from bead 11.

Carcass 2 also comprises an innerliner 13 covering portions 5, 6 and 8 of body ply 4; two abrasion strips 14 (only one shown) located on either side of innerliner 13 and each surrounding a respective curved portion 8; and two sidewalls 15 (only one shown), each located outwards of respective abrasion strip 14.

Each upturned portion 7, together with respective intermediate portion 6, respective curved portion 8, respective abrasion strip 14, respective sidewall 15 and respective assembly 10, defines a respective bead portion 1a of tire 1.

As shown in Figure 1, annular assembly 3 comprises a substantially cylindrical tread belt 16 comprising one or more superimposed tread plies 17 and extending outwards of central portion 5 of body ply 4; and a tread 18, which is anchored to tread plies 17 via the interposition of a cushion 19, and comprises two shoulders 20 (only one shown), each of which is connected by cushion 19 to a free end of a respective sidewall 15.

As shown in Figure 1, each bead filler 12 is a composite filler comprising an extruded triangular filler element 21 located radially outwards of respective bead 11, and an inner layer 22. Element 21 and inner layer 22 are made of similar but not necessarily identical material with a relatively high modulus of elasticity and a Shore hardness of generally over 80°; and inner layer 22 is preferably defined by a calendered liner presenting a constant thickness of about 1-2 mm, and partially interposed between the upper part of element 21 and respective inner intermediate portion 6 of body ply 4.

As shown in Figure 1, each bead filler 12 also comprises a reinforced outer layer 23 partially interposed between the upper part of triangular filler element 21 and outer upturned portion 7 of body ply 4. Outer layer 23 presents a substantially constant thickness of the same order as that of body ply 4, and is reinforced internally with wires or textile cords (not shown) extending in a direction forming a given angle with the cords (not shown) of body ply 4.

Outer layer 23 extends outwards, in relation to respective bead 11, to a lesser degree than inner layer 22 and outer upturned portion 7 of body ply 4. More specifically, inner layer 22 forms an elastic cushion for supporting and connecting a free outer end of outer layer 23 to inner intermediate portion 6 of body ply 4. For which purpose, inner layer 22 comprises a first end portion 24 interposed between the upper part of element 21 and inner intermediate portion 6 of body ply 4; an intermediate portion 25 interposed between outer layer 23 and inner intermediate portion 6 of body ply 4; and a second end portion 26 interposed between outer upturned portion 7 and inner intermediate portion 6 of body ply 4.

Preferably, and as shown in Figure 2, both inner layer 22 and outer layer 23 are preassembled to body ply 4, normally on a known building drum 27, prior to forming carcass 2 and turning up outer upturned portion 7 of body ply 4, to simplify the manufacture of tire 1 and at the same time position bead filler 12 extremely accurately in relation to body ply 4.

In tire 1 as described above, the addition of inner layer 22 provides, in an extremely straightforward, low-cost manner, for extending triangular filler element 21 outwards in relation to the respective bead 11, thus eliminating any instability of element 21, and also for adjusting the elastic response of tire 1 to transverse loads with no substantial increase in weight.

As regards the low cost of layer 22, it should be pointed out that layer 22 is not only a calendered layer, and therefore much cheaper than a corresponding extruded element, but is also cheap and easy to apply by virtue, as stated, of the possibility of being preassembled to body ply 4 prior to forming carcass 2. Moreover, inner layer 22 also provides for further controlling the lateral deformability of the sidewalls of tire 1 by the addition of layer 23, which would be difficult to apply in the absence of a cushioning layer, such as inner layer 22, capable of absorbing the fatigue stress generated between body ply 4 and the outer end of layer 23.

## Claims

1. A vehicle radial tire, the tire (1) being of the type comprising two bead portions (la), each in turn comprising an assembly (10) of a metal bead (11) and a bead filler (12); and a reinforced body ply (4) folded about said assembly (10) and comprising an inner intermediate portion (6) and an outer upturned portion (7); said bead filler (12) being a composite filler and comprising a triangular filler element (21) located radially outwards of the respective said metal bead (11) and an inner layer (22) partially interposed between the upper part of the triangular filler element (21) and said inner intermediate portion (6) of the reinforced body ply (4); said inner layer (22) and said triangular filler element (21) being made of materials presenting similar chemical-physical characteristics; said tire being characterized in that said bead filler (12) also comprises a reinforced outer layer (23) partially interposed between the upper part of the triangular filler element (21) and said outer upturned portion (7) of the reinforced body ply (4); said inner layer (22) constituting an elastic cushion for connecting an end of said outer layer (23) to said inner intermediate portion (6) of the reinforced body ply (4) and comprising a first end portion (24) interposed between the upper part of the triangular filler element (21) and said inner intermediate portion (6) of the reinforced body ply (4), an intermediate portion (25) interposed between said outer layer (23) and said inner intermediate portion (6) of the reinforced body ply (4), and a second end portion (26) interposed between said outer upturned portion (7) and said inner intermediate portion (6) of the reinforced body ply (4).

2. A tire as claimed in Claim 1, characterized in that said inner layer (22) presents a substantially constant thickness.

3. A tire as claimed in Claim 1 or 2, characterized in that said inner layer (22) presents a thickness in the order of 1-2 mm.

4. A tire as claimed in Claim 2 or 3, characterized in that said inner layer (22) is defined by a calendered liner.

5. A method of making a tire as claimed in one of the foregoing Claims from 2 to 4, characterized in that said inner layer (22) is pre-assembled to said reinforced body ply (4).

6. A tire as claimed in Claims 1 to 4, characterized in that said inner intermediate portion (6) and said outer upturned portion (7) of the reinforced body ply (4) are located directly contacting each other to define a closed annular chamber (9) housing the respective bead (11), the respective triangular filler element (21) and the respective inner (22) and outer (23) layers.

7. A tire as claimed in Claims 1-4 and 6, characterized in that said outer layer (23) is an internally reinforced layer.

8. A tire as claimed in Claim 7, characterized in that said outer layer (23) presents a substantially constant thickness of the same order as the thickness of said reinforced body ply (4).

## Patentansprüche

1. Radialfahrzeugreifen, wobei der Reifen (1) von der Art ist, welche folgendes umfaßt: zwei Wulstteile (la), von denen jeder seinerseits einen Aufbau (10) aus einer Metallwulst (11) und einem Wulstfüller (12) umfaßt; und eine verstärkte Körperlage bzw. -schicht (4), die um den Aufbau (10) gefaltet ist und einen inneren, zwischenliegenden Teil (6) sowie einen äußeren umgedrehten bzw. hochgebogenen Teil (7) umfaßt; wobei der Wulstfüller (12) ein zusammengesetzter Füller ist und ein dreieckiges Füllmaterialelement (21), das radial auswärts von der jeweiligen Metallwulst (11) lokalisiert ist, sowie eine innere Schicht (22), die teilweise zwischen den oberen Teil des dreieckigen Füllmaterialelements (21) und den inneren, zwischenliegenden Teil (6) der verstärkten Körperlage bzw. -schicht (4) zwischengefügt ist, umfaßt; wobei die innere Schicht (22) und das dreieckige Füllmaterialelement (21) aus Materialien hergestellt sind, welche gleichartige bzw. ähnliche chemisch-physikalische Eigenschaften aufweisen; welcher Reifen dadurch **gekennzeichnet** ist, daß der Wulstfüller (12) außerdem eine verstärkte äußere Schicht (23) umfaßt, die teilweise zwischen den oberen Teil des dreieckigen Füllmaterialelements (21) und den äußeren umgedrehten bzw. hochgebogenen Teil (7) der verstärkten Körperlage bzw. -schicht (4) zwischengefügt ist; wobei die innere Schicht (22) ein elastisches Polster zum Verbinden von einem Ende der äußeren Schicht (23) mit dem inneren, zwischenliegenden Teil (6) der verstärkten Körperlage bzw. -schicht bildet und einen ersten Endteil (24) umfaßt, der zwischen den oberen Teil des dreieckigen Füllerelements (21) und den inneren, zwischenliegenden Teil (6) der verstärkten Körperlage bzw. -schicht (4) zwischengefügt ist, sowie einen zwischenliegenden Teil (25), der zwischen die äußere Schicht (23) und den inneren zwischenliegenden Teil (6) der verstärkten Körperlage bzw. -schicht (4) zwischengefügt ist, und einen zweiten Endteil (26), der zwischen den äußeren umgedrehten bzw. hochgebogenen Teil (7) und den inneren zwischenliegenden Teil (6) der verstärkten Körperlage bzw. -schicht (4) zwischengefügt ist.

2. Reifen nach Anspruch 1, dadurch **gekennzeichnet**, daß die innere Schicht (22) eine im wesentlichen konstante Dicke aufweist.

3. Reifen nach Anspruch 1 oder 2, dadurch **gekennzeichnet**, daß die innere Schicht (22) eine Dicke in der Größenordnung von 1 bis 2 mm aufweist.

4. Reifen nach Anspruch 2 oder 3, dadurch **gekennzeichnet,** daß die innere Schicht (22) durch eine kalandrierte Einlage definiert bzw. begrenzt ist.

5. Verfahren zum Herstellen eines Reifens gemäß einem der vorhergehenden Ansprüche von 2 bis 4, dadurch **gekennzeichnet,** daß die innere Schicht (22) mit der verstärkten Körperlage bzw. -schicht (4) vorzusammengebaut wird.

6. Reifen, wie er in den Ansprüchen 1 bis 4 beansprucht ist, dadurch **gekennzeichnet,** daß der innere, zwischenliegende Teil (6) und der äußere umgedrehte bzw. hochgebogene Teil (7) der verstärkten Körperlage bzw. -schicht (4) so lokalisiert sind, daß sie zum Definieren bzw. Begrenzen einer geschlossenen ringförmigen Kammer (9), welche die jeweilige Wulst (11), das jeweilige dreieckige Füllerelement (21) und die jeweilige innere (22) und äußere (23) Schicht aufnimmt, einander direkt kontaktieren.

7. Reifen, wie er in den Ansprüchen 1 bis 4 und 6 beansprucht ist, dadurch **gekennzeichnet,** daß die äußere Schicht (23) eine intern bzw. innen verstärkte Schicht ist.

8. Reifen nach Anspruch 7, dadurch **gekennzeichnet,** daß die äußere Schicht (23) eine im wesentlichen konstante Dicke von der gleichen Größenordnung aufweist, wie es die Dicke der verstärkten Körperlage bzw. -schicht (4) ist.

## Revendications

1. Pneumatique radial pour véhicules, le pneumatique (1) étant du type comprenant deux parties (1a) de talon, chacune étant elle-même constituée par un ensemble (10) comprenant un talon métallique (11) et un bourrage (12) sur tringle, et une nappe carcasse armée (4) pliée autour dudit ensemble (10) et comportant une partie intérieure intermédiaire (6) et une partie extérieure (7) tournée vers le haut, ledit bourrage (12) sur tringle étant un bourrage composite et comportant un élément triangulaire de bourrage (21) situé radialement à l'extérieur dudit talon métallique respectif (il) et une couche intérieure (22) partiellement intercalée entre la partie supérieure de l'élément triangulaire de bourrage (21) et ladite partie intérieure intermédiaire (6) de la nappe carcasse armée (4); ladite couche intérieure (22) et ledit élément triangulaire de bourrage (21) étant en matières présentant des caractéristiques physico-chimiques similaires, ledit pneumatique étant caractérisé en ce que ledit bourrage 12 sur tringle comporte également une couche extérieure armée (23) partiellement intercalée entre la partie supérieure de l'élément triangulaire de bourrage (21) et ladite partie extérieure (7) tournée vers le haut du bourrage armé de corps, ladite couche intérieure 22 constituant un élément intermédiaire élastique servant à relier une extrémité de ladite couche extérieure (23) à ladite partie intérieure intermédiaire de la nappe carcasse armée (4) et comportant une première extrémité (24) intercalée entre la partie supérieure de l'élément triangulaire de bourrage (21) et ladite partie intérieure intermédiaire (6) de la nappe de bourrage armée (4), une partie intermédiaire (25) intercalée entre ladite couche extérieure (23) et ladite partie intérieure intermédiaire (6) de la nappe carcasse armée (4) et une deuxième extrémité (26) intercalée entre ladite partie (7) tournée vers le haut et ladite partie intérieure intermédiaire (6) de la nappe carcasse armée (4).

2. Pneumatique selon la revendication 1, caractérisé en ce que ladite couche intérieure (22) présente une épaisseur sensiblement constante.

3. Pneumatique selon la revendication 1 ou 2, caractérisé en ce que ladite couche intérieure (22) présente une épaisseur de l'ordre de 1 à 2 mm.

4. Pneumatique selon la revendication 2 ou 3, caractérisé en ce que ladite couche intérieure 22 est définie par un calandrage.

5. Procédé de fabrication de pneumatique selon l'une quelconque des revendications précédentes 2 à 4, caractérisé en ce que ladite couche intérieure (22) est préassemblée avec ladite nappe carcasse armée (4).

6. Pneumatique selon les revendications 1 à 4, caractérisé en ce que ladite partie intérieure intermédiaire 6 et ladite partie extérieure 7, tournée vers le haut, de la nappe carcasse armée (4) sont placées directement au contact l'une de l'autre pour définir une chambre annulaire fermée (9) contenant le talon respectif (il), l'élément triangulaire de bourrage respectif (21) et les couches intérieure (22) et extérieure (23) respectives.

7. Pneumatique selon les revendications 1 à 4 et 6, caractérisé en ce que ladite couche extérieure (23) est une couche à armature interne.

8. Pneumatique selon la revendication 7, caractérisé en ce que ladite couche extérieure (23) présente une épaisseur sensiblement constante du même ordre que l'épaisseur de ladite nappe carcasse armée (4).
